Europäisches Patentamt

European Patent Office

Office européen des brevets

(11) Publication number: **0 152 726**
A1

# EUROPEAN PATENT APPLICATION

(21) Application number: **84850050.0**

(22) Date of filing: **13.02.84**

(51) Int. Cl.⁴: **B 01 J 3/06**

(43) Date of publication of application: **28.08.85**
Bulletin 85/35

(84) Designated Contracting States: **AT BE CH DE FR GB IT LI LU NL SE**

(71) Applicant: **Areskoug, Carl Otto, Näsgränden 25, S-292 00 Karlshamn (SE)**

(72) Inventor: **Areskoug, Carl Otto, Näsgränden 25, S-292 00 Karlshamn (SE)**

(74) Representative: **Berglund, Gustav Arthur et al, AWAPATENT AB Box 5117, S-200 71 Malmö (SE)**

(54) Pressure vessel for high-pressure apparatus.

(57) A pressure vessel for a high-pressure apparatus comprising a tubular jacket divided into a plurality of generally cylinder sector-shaped elements (3) and having generally conical end surfaces, two pressure pistons (4, 5) engaging said conical end surfaces, and an inner heat-insulating housing (6) accommodating a reaction chamber (7) and surrounded and supported by said pressure vessel.

The cylinder sector-shaped elements (3) are formed such that, in pressurised condition, they seal tightly against one another and against said pressure pistons (4, 5) adjacent said inner housing (6) but, at a distance from said inner housing, form thin axially and radially extending gaps interconnecting annular gaps (8, 9) between each pressure piston and the end surface of said jacket at a distance from said inner housing. The annular gaps (8, 9) have inlets and outlets (12, 10) for a cooling medium adapted to be conducted at low pressure through said axial and said annular gaps. The axially and radially extending gaps thus form a cooling system for the pressure vessel of a high-pressure apparatus. The high-pressure apparatus also comprises means (12, 16, 17) for applying pressure to the outer side of the pressure vessel.

1

## PRESSURE VESSEL FOR HIGH-PRESSURE APPARATUS

The present invention relates in general to high-pressure apparatuses of a type suitable for the manufacture of diamonds and similar material, i.e. wherein pressures of the order 70 kbar and temperatures of the order 2000°C may be achieved. To be precise, it relates to a pressure vessel contained in such a high-pressure apparatus, which pressure vessel consists of a tubular jacket divided into a plurality of generally cylinder sector-shaped elements and having conical end surfaces, two pressure pistons engaging said conical end surfaces, and an inner heat-insulating housing accommodating a reaction chamber and surrounded and supported by said pressure vessel. The high-pressure apparatus also comprises per se known means for applying pressure to the outer side of said pressure vessel.

In order to avoid too high a stress on the material of the pressure vessel and thus prolong its life considerably, the temperature of the pressure vessel should be kept low, although the temperature inside the reaction chamber may need to be as high as 1500-2000°C. Cooling of the outer side of the pressure vessel does not lead to the desired result, and cooling of the pressure vessel via channels in the cylinder sector-shaped elements entails a deterioration of the strength of the elements which counteracts the increase of the life of the elements which is the object of the cooling. Thus, if the cooling channels are placed so close to the inside of the jacket that sufficient cooling is obtained, it is difficult to maintain the required strength owing to the stress concentration around the cooling channels. If, on the other hand, the cooling channels are placed closer to the outer side of the jacket to satisfy the strength requirements, it would instead be difficult to obtain sufficient cooling.

The invention aims at providing a pressure vessel for a high-pressure apparatus, which pressure vessel has such a cooling system that the required low temperature may be achieved at the inner boundary surface of the pressure vessel, and a decrease of the strength of the pressure vessel may be avoided. Such a cooling system also makes it possible to reduce the thickness of the inner, heat-insulating housing, whereby the effective volume of the reaction chamber increases.

According to the invention, this is achieved, for a pressure vessel of the type mentioned by way of introduction, in that the cylinder sector-shaped elements are formed such that, in pressurised condition, they seal tightly against one another and against said pressure pistons adjacent said inner housing but, at a distance from said inner housing, form thin axially and radially extending gaps interconnecting annular gaps between each pressure piston and the end surface of said jacket at a distance from said inner housing, and in that said annular gaps have inlets and outlets for a cooling medium adapted to be conducted at low pressure through said axial and annular gaps. Preferred embodiments of the high-pressure apparatus according to the invention will appear from the appended sub-claims.

The invention takes advantage of the feature that the tubular jacket of the pressure vessel is divided into a plurality of generally cylinder sector-shaped elements, more particularly by providing gaps in the areas of the radial boundary planes between the cylinder sector-shaped elements and at a distance from said inner housing. A cooling medium, for example water, is conducted through said gaps, whereby the required cooling can be achieved, if the number of cylinder sector-shaped elements is sufficiently great, not less than 6 and preferably at least 10-12. To withstand the high pressure in the reaction chamber, the cylinder sector-shaped elements must apply a supporting pressure to each

3

other across the radial boundary planes. However, this supporting pressure is not necessary over the whole distance between the inner and outer boundary surfaces of the cylinder sector-shaped elements but may cease at a surprisingly short distance from the inner boundary surface. By this short distance, the extent of which is thus determined by the magnitude of the pressure required for  mutually supporting the cylinder sector-shaped elements and the pressure pistons, the requisite cooling facilities can be established, provided that the jacket is divided into a sufficient number of cylinder sector-shaped elements, as stated above.

An embodiment of a high-pressure apparatus according to the present invention will be described in detail below, reference being had to the accompanying drawings in which:

Fig. 1 is a longitudinal section of an embodiment of the high-pressure apparatus according to the invention;

Fig. 2 is a horizontal projection, partly cut away, of the apparatus in Fig. 1;

Fig. 3 is a schematic horizontal projection showing the elastic deformation of the cylinder sector-shaped elements which form a pressure vessel in a high-pressure apparatus;

Fig. 4 shows schematically the cross-sectional shape of one of said cylinder sector-shaped elements in a high-pressure apparatus according to the invention; and

Fig. 5 shows, on a larger scale than the other Figures, two cylinder sector-shaped elements of the pressure vessel in loaded condition and shows especially the temperature distribution in said elements when cooling with water according to the invention.

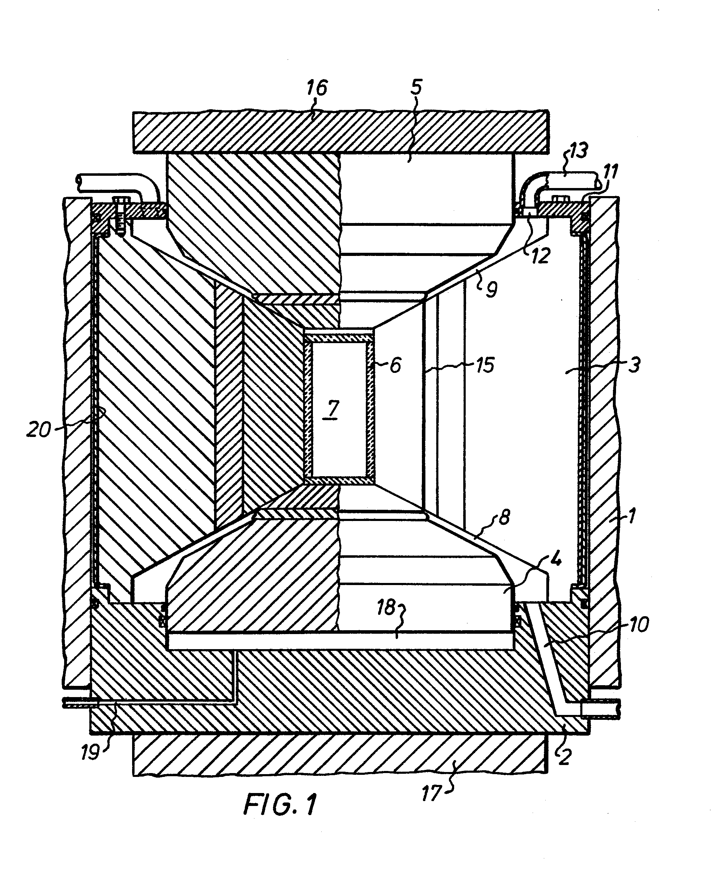

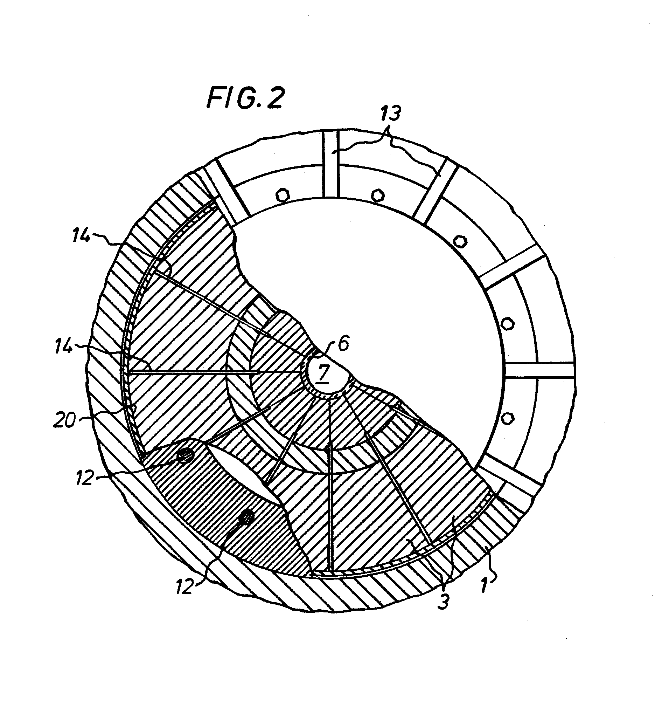

The embodiment shown in Figs. 1 and 2 of a high-pressure apparatus comprising a pressure vessel according to the invention consists of an outer pressure

4

cylinder 1, in the lower part of which a base block 2 is fitted. In the pressure cylinder 1, the pressure vessel is accommodated which consists of a tubular jacket, divided into twelve generally cylinder sector-shaped elements 3, and two pressure pistons 4 and 5. The jacket formed by the cylinder sector-shaped elements 3 has generally conical end surfaces, the inner part of which is engaged by the corresponding conical end surfaces of the pressure pistons 4, 5, possibly with an interjacent packing of for example pyrophyllite. The pressure vessel accommodates and supports an inner heat-insulating housing 6 which defines the reaction chamber 7. At a distance from the housing 6 an annular gap 8 is formed between the lower end surface of the jacket formed by the elements 3 and an outer part of the lower pressure piston 4. The gap 8 widens radially and axially and is axially defined by an upper surface of the base block 2. Opening in the upper surface of the bottom block 2 are outlet ducts 10 corresponding in number to the cylinder sector-shaped elements 3. More precisely, each outlet duct 10 opens directly opposite the boundary plane between two cylinder sector-shaped elements 3. Between the upper conical end surface of the tubular jacket and an outer part of the pressure piston 5, an annular gap 9, corresponding to the gap 8, is formed which also extends axially and radially and is upwardly closed by a cover ring 11. In the cover ring 11 inlet openings 12 are provided in the same manner as the outlet ducts 10 in the base block 2. Via the inlet tubes 13 a cooling medium, preferably water, is fed through the inlet openings 12 and into the annular gap 9. In the radial boundary planes between the cylinder sector-shaped elements 3, thin axially and radially extended gaps 14 are formed, interconnecting the annular gaps 8 and 9. The cooling medium which enters the annular gap 9 and is of low pressure, for example atmospheric pressure, is thus conducted through the gaps 14 axially downwards to the

5

annular gap 8 from where the cooling medium is conducted out through the outlet ducts 10. However, it would also be possible to conduct the cooling medium in the opposite direction through the pressure vessel.

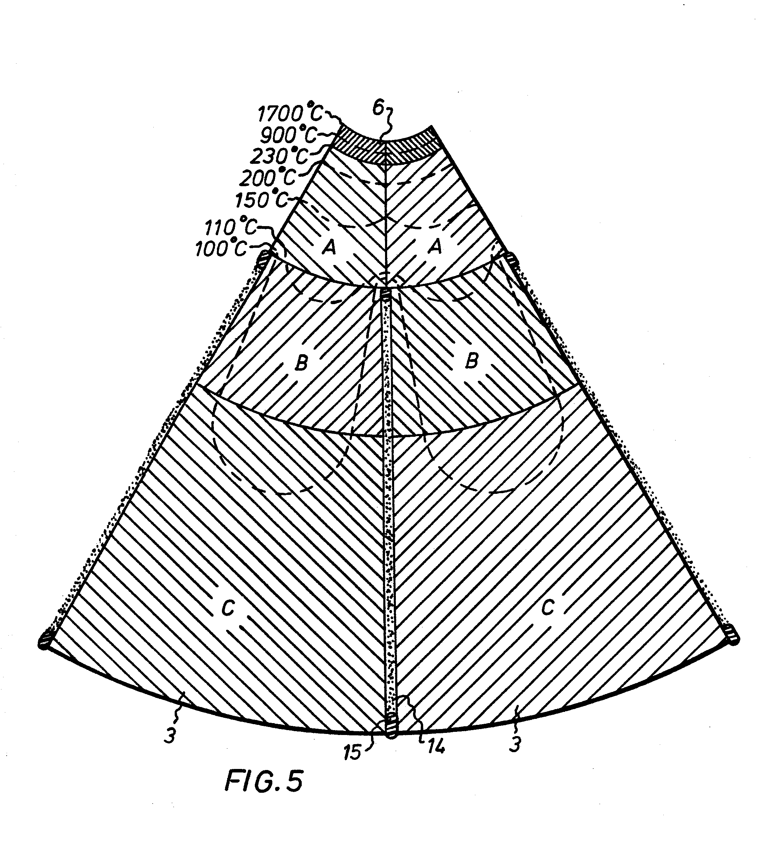

The gaps 14 have their radially inner side edge at a distance from the inner housing 6 and have their outer side edge at the outer circumference of the pressure vessel. The distance between the inner side edge and the inner housing 6 must be as short as possible but still long enough to prevent the strength of the elements 3 from deteriorating toward critical values. Along said side edges of the gaps 14, suitable rubber seals 15 or the like (see Figs. 1 and 5) are provided.

For applying pressure to the outer side of the pressure vessel, the upper pressure piston 5 and the base block 2 are mounted in a press frame 16, 17. The lower pressure piston 4 is movable in a cylinder chamber 18 formed in the base block 2, to which cylinder chamber a channel 19 extends from a source of high-pressure oil. In a similar manner, high-pressure oil is fed to the annular space between the inside of the pressure cylinder 1 and the outside of the cylinder sector-shaped elements 3 which are surrounded by a sealing shell 20.

In Figs. 1 and 2, the high-pressure apparatus according to the invention is shown in pressurised condition, a pressure of some kbar being applied to the outer side of the elements 3 by means of the high-pressure oil, while at the same time pressure is applied to the pressure pistons 4, 5 such that a pressure of 30 kbar is maintained within the reaction chamber 7. To increase the pressure in the reaction chamber 7 to the pressure required for e.g. the making of diamonds, the temperature in the reaction chamber can be raised by electric heating of bodies placed in the reaction chamber and having the necessary high coefficient of thermal expansion at the prevailing pressure.

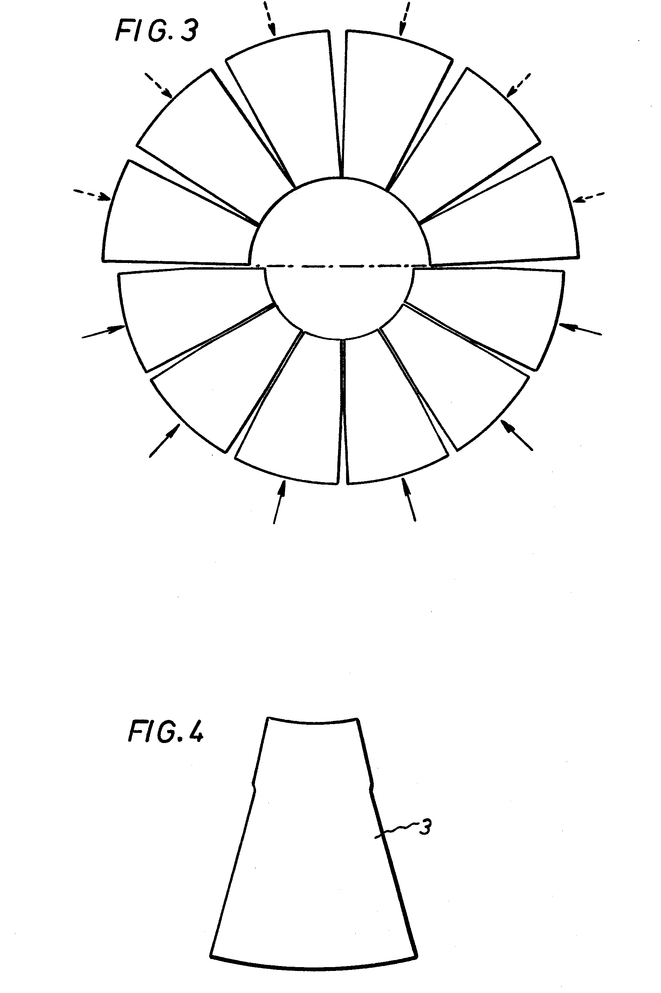

When pressurising a high-pressure apparatus designed according to the invention, an elastic deformation of the cylinder sector-shaped elements 3 is obtained, as shown in Fig. 3, the upper part of which shows the elements in unloaded condition, while the lower part shows the elements in loaded condition. The considerably exaggerated reduction in the volume of the reaction chamber which is shown in Fig. 3 and which is caused by the radial application of pressure, contributes to the pressure increase in the chamber, although to a limited extent only.

The actual cross-sectional shape of the generally cylinder sector-shaped elements 3 is not the one shown in Fig. 3 but has, rather, the appearance shown in Fig. 4 which illustrates schematically the shape of an element 3 in unloaded condition. The surfaces of contact between the elements 3, 4 and 5 are designed such that an elastic deformation of the parts, when subjected to pressure, produces a smooth and optimal mutual supporting pressure, thus avoiding values exceeding the strength of the material. The cross-sectional shape of the cylinder sector-shaped elements 3 is to be such that the elements 3 in loaded condition generally have the shape appearing from Figs. 2 and 5.

Fig. 5 shows an example of the temperature distribution than can be achieved with a high-pressure apparatus designed in accordance with the invention. In Fig. 5 it is assumed that the temperature in the reaction chamber 7 is about $1700^{O}C$ and that cooling is effected by means of water, the temperature of which does not exceed $100^{O}C$ in the outlet. As appears from Fig. 5, a temperature drop from $1700^{O}C$ to $230^{O}C$ is achieved across the thickness of the inner housing 6 which consists of heat-insulating material. In the embodiment described, the cylinder sector-shaped elements 3 consist of three layers A, B and C, of which layer A consists of tungsten carbide of high compressive strength and layers B and C consist of tungsten carbide of

7

successively lower compressive strengths. The layer C may also consist of tool steel. This make-up of layers reduces the total cost for the elements 3, is chosen for reasons of manufacture, and is possible since the outer parts of the elements 3 are exposed to both lower temperatures and lower pressures. Tungsten carbide is a good heat conductor, which in combination with a relatively large number of cylinder sector-shaped elements 3 gives the favourable temperature distribution as shown in Fig. 5.

A number of modifications of the high-pressure apparatus are possible within the scope of the invention. For example, it may be convenient to provide a seal in the form of a thin steel jacket between the inner heat-insulating housing 6 and the inside of the pressure vessel formed by the elements 3. Furthermore, the number of inlets and outlets for the cooling medium may vary, and they must not necessarily be located directly opposite the gaps 14. Also the pressure pistons 4, 5 may be made up of layers of different materials, and preferably they are provided with some sort of cooling device. Besides, the pressure pistons may be identical in shape, and the design of the part of the high-pressure apparatus located outside the pressure vessel may of course be modified in several respects.

8

CLAIMS

1. Pressure vessel for high-pressure apparatus, said pressure vessel comprising a tubular jacket which is divided into a plurality of generally cylinder sector-shaped elements (3) and having generally conical end surfaces, two pressure pistons (4, 5) engaging said conical end surfaces, and an inner heat-insulating housing (6) accommodating a reaction chamber (7) and surrounded and supported by said pressure vessel, c h a r a c t e r i s e d in that said cylinder sector-shaped elements (3) are formed such that, in pressurised condition, they seal tightly against one another and against said pressure pistons (4, 5) adjacent said inner housing (6) but, at a distance from said inner housing, form thin axially and radially extending gaps (14) interconnecting annular gaps (8, 9) between each pressure piston and the end surface of said jacket at a distance from said inner housing, and that said annular gaps (8, 9) have inlets and outlets (12, 10) for a cooling medium adapted to be conducted at low pressure through said axial and annular gaps.

2. Pressure vessel as claimed in claim 1, c h a r a c t e r i s e d in that each cylinder sector-shaped element (3) is made up in radial direction of several layers (A, B, C) of different materials, the inner layer (A) having the highest strength.

3. Pressure vessel as claimed in claim 2, c h a - r a c t e r i s e d in that the outer layer (C) of said cylinder sector-shaped elements (3) consists of tool steel.

4. Pressure vessel as claimed in any one of claims 1-3, c h a r a c t e r i s e d in that the number of cylinder sector-shaped elements (3) is at least six and preferably between ten and twelve.

5. Pressure vessel as claimed in any one of claims 1-4, c h a r a c t e r i s e d in that said cylinder sector-shaped elements (3) consist wholly or partly of tungsten carbide.

6. Pressure vessel as claimed in any one of claims 1-5, c h a r a c t e r i s e d in that a plurality of inlets (12) and outlets (10) are distributed each around the peripheral part of one annular gap (9, 8).

7. Pressure vessel as claimed in any one of claims 1-6, c h a r a c t e r i s e d by a thin steel jacket between said inner heat-insulating housing (6) and said pressure vessel.

8. Pressure vessel as claimed in any one of claims 1-7, c h a r a c t e r i s e d by cooling medium seals (15) in all interfaces between said cylinder sector-shaped elements (3) and exposed towards said gaps (8, 9, 14).

9. Cooling system for the pressure vessel of a high-pressure apparatus, said vessel comprising a tubular jacket which is divided into a plurality of generally cylinder sector-shaped elements (3) and having generally conical end surfaces, two pressure pistons (4, 5) engaging said conical end surfaces, and an inner heat-insulating housing (6) accommodating a reaction chamber (7) and surrounded and supported by said pressure vessel, c h a r a c t e r i s e d by thin axially and radially extending gaps (14) in the radial boundary planes between said cylinder sector-shaped elements (3) and at a distance from said inner housing (6) and axially spaced apart inlets and outlets (12, 10) which are interconnected with said gaps (14) for conducting a cooling medium at low pressure through said gaps.

10. High-pressure apparatus comprising a pressure vessel as claimed in any one of claims 1-7 and means (12, 16, 17) for applying pressure to the outer side of said pressure vessel.

FIG. 1

FIG.2

FIG. 3

0152726
3/4

FIG. 4

3

FIG.5

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 263 185 (ALLMÄNNA SVENSKA ELEKTRISKA AKTIEBOLAGET) * page 1, left-hand column, lines 1-4; page 2, right-hand column, lines 60-87; page 2, right-hand column, lines 16-41, 49-58; page 3, right-hand column; page 3, left-hand column, lines 1-8; page 4, left-hand column, lines 10-19; figures 1,2 * | 1-3,6, 8-10 | B 01 J 3/06 |
| A | LU-A- 58 066 (B.C. VON PLATEN) * whole document * | 1-10 | |
| A | FR-A-1 346 568 (ALLMANNA SVENSKA ELEKTRISKA AKTIEBOLAGET) * whole document * | 1-10 | TECHNICAL FIELDS SEARCHED (Int. Cl. ³) |
| A | FR-A-1 331 402 (J. BASSET) * page 3, right-hand column, lines 21-30; figure 10 * | 2,3,5 | B 01 J B 22 F B 30 B |

The present search report has been drawn up for all claims

| Place of search THE HAGUE | Date of completion of the search 16-10-1984 | Examiner GOURIER P.A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82